# EUROPEAN PATENT SPECIFICATION

(11) **EP 2 526 764 B1**
(45) Date of publication and mention of the grant of the patent: **29.06.2016**
(21) Application number: 12169015.0
(22) Date of filing: 23.05.2012
(51) Int. Cl.: A01K 11/00

(54) **Electronic livestock tag**
Elektronisches Viehetikett
Étiquette de bétail électronique

(30) Priority: 26.05.2011 NO 20110771
(43) Date of publication of application: 28.11.2012
(73) Proprietor: OS ID AS, 2550 Os i Østerdalen (NO)
(72) Inventor: Ligard, Bjørn, 2550 Os i Østerdalen (NO)
(74) Representative: Protector IP Consultants AS

(56) References cited:
- EP-A1- 1 690 451
- EP-A2- 2 272 330
- WO-A1-2007/009553
- DE-U1-202004 011 020

## Description

The present invention in general relates to a novel method of provisionally joining livestock tags in a very compact manner in the form of strips, for easy shipment and handling.

In particular, the present invention is directed to ensuring that the male and the female tag parts, which are essential components of livestock tags, do not get separated accidentally or unintentionally before being put to actual use.

### TECHNICAL BACKGROUND OF THE INVENTION

The livestock tags, which are also known as animal ear tags, are of extensive use especially in the countries, where the scale of industrial livestock production is very high.

The livestock tags are inserted through the ears of the animals. As each livestock tag has a unique identification number, these tags play a very significant role in identifying each and every animal. The owner of the animal can also be identified from the identification number. Similarly, the tags are also used to keep an account of the animal's life, including the associated details of its illness, vaccinations and so on. As a matter of fact, continuous tracking of an animal, right from its birth to the slaughter house and then to the shop has also become a standard practice in many countries these days.

It is also known, that a RF module with a built-in antenna is also affixed with the livestock tag for better animal management. The RF module facilitates remote tracking of the animals and also transferring all the related information about the movement of the animals, to the central management system.

Each livestock tag consists of a male and a female part, both having the same identification number. The male part has a projected tip in it and the female part has a cup at an appropriate position so that when the male part and the female part are assembled, the tip of the male part would be positioned exactly inside the cup of the female part. In actual application, with the help of a suitable applicator, the tip of the male part is inserted through the cartilage of the animal's ear, placed into the cup on the female part and then locked in place in a fail-safe manner.

The livestock tags are manufactured in various shapes and colours for easy identification even from a distance.

The livestock tags are generally made from non-rigid plastic, with the exception of certain parts of the locking mechanism between the male and the female parts. The identification numbers are applied to the tags during the manufacturing process itself.

The current regulations in most of the countries state that once put in position, a livestock tag cannot be removed until the animal has been slaughtered. Therefore, mere change of ownership does not mean that the old tag would be replaced by a new one. Rather, the new owner could or possibly should attach an additional tag along with the existing one.

For each and every animal, there will be at least two official tags, one for each ear, each consisting of two parts, one male part and one female part. There may be two or more additional pair of tags, also consisting of two parts. That means there will be at least four or may be six or even larger number of tag parts for every animal, which should not get separated.

For easy handling and shipment and also for making it compact, it is prudent to manufacture the livestock tags in the form of strips. In this regard, various methodologies have been suggested.

The most important aspect of such livestock strip manufacturing is that the male and female tags of a particular pair in a strip, having the same identification numbers must stay together as a pair and must not get separated accidentally before the actual insertion and the locking process. However, the prior art known in the field, has no teaching to that effect in a secure manner.

Prior art known in the field is largely directed to keeping the two parts of a tag intact on the animal's ear, and has no teaching regarding keeping such parts intact in a strip. For example, WO 2007/009553 discloses an ear tag having a male part and a female part. The male part has a head, which is received by a receptacle of the female part. A retaining means, keeps the head secured in the receptacle.

EP 1690451 of the same applicants discloses a method of manufacturing livestock tags where tag parts are joined in an overlapping manner in the form of strips. Here male and female parts are placed alternatively and then joined through ultra-sonic welding. While placing the male and female parts it is ensured that each male part has the same identification number as the adjacent female part. The male parts and the adjacent female parts having the same identification number would form a pair and would be used as pairs while inserting through the ears of the animals.

The abovementioned patent of the applicants does solve the disadvantages hitherto known in prior art. However, it has been observed in the strips manufactured by the methodology of this prior art, that accidental breakage in the strips between a male part and its corresponding female part, having the same identification number is not at all an unavoidable happening. This leads to obviously serious confusion for the user, while applying the tags for insertion.

Therefore, there exists a need for a method of joining livestock tag parts in a very compact manner for easy shipment and handling, preferably in strips, ensuring that the male parts and the female parts having the same identification number, forming a particular pair in a strip of tags, does not get separated before being put to actual use.

The present invention meets the above need and other associated needs as disclosed hereinafter.

### OBJECTS OF THE INVENTION

The primary object of the present invention is to join the livestock tags in a very compact manner for easy shipment and handling, so that the male part and its corresponding female part of a particular pair in a strip of livestock tags, do not get separated before being put to actual use.

It is also an object of the present invention to provide livestock tags each having a male part and a corresponding female part detachably attached thereon, as a single unit.

It is also an object of the present invention to provide livestock tags joined in a progressive numerical order which are easy to check.

It is another object of the present invention to provide livestock tags in the form of strips which are convenient to handle and can be transported easily without any breakage.

It is another object of the present invention to provide a strip of livestock tags, where tags are placed in an overlapping manner or are joined along respective edges.

It is another object of the present invention to provide livestock tags, which are joined through welding which does not require any additional material.

It is another object of the present invention to provide livestock tags, which are joined through a welding process, which is easy to control.
How the above objects are fulfilled will appear clear to persons skilled in the art, from the description and claims hereinafter.
All through the specification including the claims, the words "livestock tag", "male part", "female part", "welding", "strip", "tag parts" are to be interpreted in the broadest sense of the respective terms and includes all similar items in the field known by other terms, as may be clear to persons skilled in the art. Restriction/limitation, if any, referred to in the specification, is solely by way of example and understanding the present invention.

### SUMMARY OF THE INVENTION

The present invention relates to a method of manufacturing a strip of livestock tags according to claim 1, and to a strip of livestock tags according to claim 4.

There is provided a method of manufacturing a strip of livestock tags, each tag having a male part and a corresponding female part. The methodology according to the invention comprises, designing a plurality of said livestock tags such that in each said tag, inner surface of each female part is detachably welded on the inner surface of a corresponding male part so as to form a single piece, followed by welding overlapping surfaces of the male parts of different live stock tags in an overlapping fashion, one after another so as to form a strip.
Preferably, the welding step comprises welding by ultrasonic, laser or thermal means without any added material.
More preferably, welding is done between one or more raised portions on the inner surface of one male part of a tag and a flat portion on the outer surface of a male part of another tag, in an overlapping fashion.

There is also provided a strip of livestock tags, comprising a plurality of tags joined together. According to the invention, the strip comprises a plurality of male parts attached to each other, each male part having a detachably attached female part thereon, along respective inner surfaces. Furthermore, the male parts of different tags are welded to each other, one after another.

### BRIEF DESCRIPTION OF THE DRAWINGS

Having described the main features of the invention above, a more detailed and non-limiting description of an exemplary embodiment will be given in the following with reference to the drawings, in which:
Figure 1 shows the top view of the inner surface of the male part of a livestock according to a preferred embodiment of the present invention.
Figure 2 shows the cross-section view of the male part of a livestock tag according to the present invention, whose inner surface is shown in figure 1.
Figure 3 shows the top view of a disc shaped female part according to a preferred embodiment of the present invention, which is welded with the inner surface of the male part, shown in figure 1.
Figure 4 two male parts of two different tags welded according to a preferred embodiment of the present invention.
Figure 5 shows a strip of livestock tags according to a preferred embodiment of the present invention.

### DETAILED DESCRIPTION OF THE INVENTION

The following describes a preferred embodiment of the invention which is exemplary for the sake of understanding the present invention and non-limiting.

The present invention describes a novel method of provisionally joining the livestock tags in a strip, eliminating the problems faced in prior art technology known in the field, as detailed hereinbefore under the heading TECHNICAL BACKGROUND OF THE INVENTION.

Every livestock tag is constituted of two parts, one male part and one female part. One unique identification number is printed on the outer surface of the male part and that of the female part.

The livestock tags are manufactured in a progressively numerical order and shipped accordingly. This ensures that the livestock tag owner, finds the successive tags sequentially.

Preferably, according to the invention, the inner surface of the male parts has two raised portions, but it is not mandatory.

In the above context it is hereby clarified, that the terms outer and inner surface of male and female parts of a tag are referred to hereinbefore and hereinafter, relative to an animal's ear having such tag fitted thereon. While in use, the inner surface faces the animal's ears and the outer surface faces away from the animal's ears.

In the present invention, initially, the inner surface of every female part and that of the corresponding male part are attached. The male part and that of its corresponding female part, have the same identification numbers.

The joining of the male and the female part is preferably achieved by ultra-sonic welding, which ensures quick and accurate welding. Of course, other methods of welding may be applied as well, such as laser welding and thermal welding. In any event, the male part and female part are detachable by hand pulling, for application.

Preferably, every female part has one RF module with a built-in antenna affixed on its outer surface by suitable means.

The male parts, having consecutive numbers and also having corresponding female parts thereon, welded along respective inner surfaces, are placed in an overlapping manner in a sequence, such that the outer surface of one male part is welded with the inner surface of the next male part, as per the numerical order. This ensures that the tags do not accidentally fall apart, yet allows them to be pulled apart manually as and when required.

The overlapping of the consecutive male parts also ensures shorter length of the strips, which result in easy shipment and handling. The welding is preferably achieved by ultra-sonic welding, which ensures quick and accurate welding. Of course, other methods of welding may be applied as well, such as laser welding and thermal welding. In any event, the welding should be such that the welded parts are detachable by hand pulling, for application.

The present invention thus ensures that even if the strip breaks, every male part still remains attached with the corresponding female part, which is welded on it in an exclusive manner, so as to form a single piece. This eliminates the possibility that due to breakage of a strip, a male part and a corresponding female part, both having same numbers get separated.

Now the present invention is explained in further detail, with reference to the following non-limiting preferred embodiment.

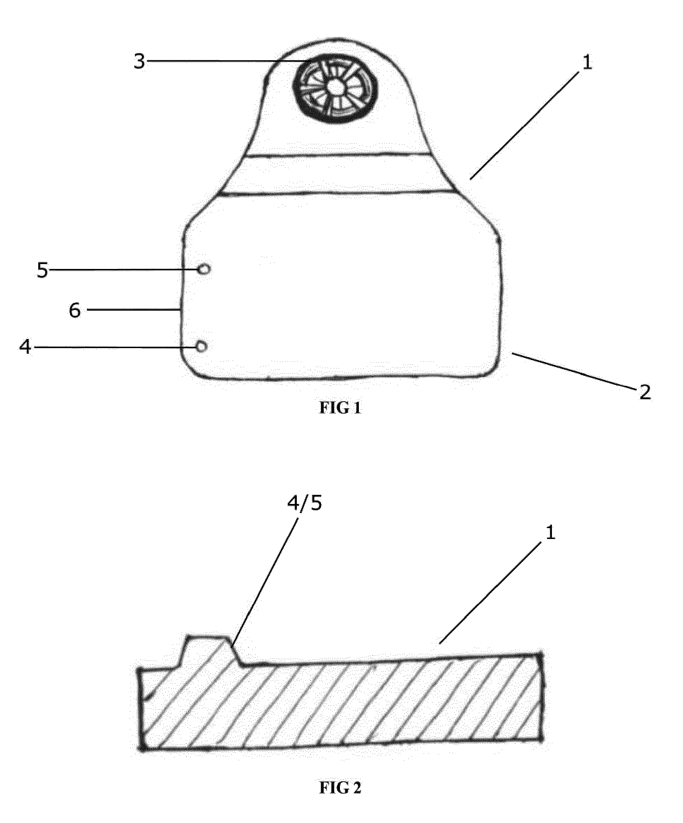

Figure 1 shows the plan view of the inner surface of a male part 1 of a livestock tag. This side is normally not provided with an identification number. This is the side that faces the animal's ear and the inner surface of the corresponding female part.

Preferably, the inner surface of the male part has a structure, which facilitates attachment with a mutually engageable structure, on the inner surface of the corresponding female part. For example, as shown in figure 1, the male part comprises a plate part 2 and a pin part 3 that projects from the plate part 2 and has a tip at its outer end. The female part has a corresponding cup portion (not shown) into which the tip of the male part is inserted and retained when the tag is to be attached to the animal.

It will be understood to persons skilled in the art, that the design as detailed in the preceding paragraph, is not consequential to the present invention.

The crux of the present invention lies in designing a male part and corresponding female part of a livestock tag, which are mutually attachable along respective inner surfaces, such that the inner surface of the female part, rests on the inner surface of the male part, so as to form a single piece. The outer surface of the male part and female parts have an identification number or a combination of letters and numbers and are generally flat surfaces. (not shown in figure 1)

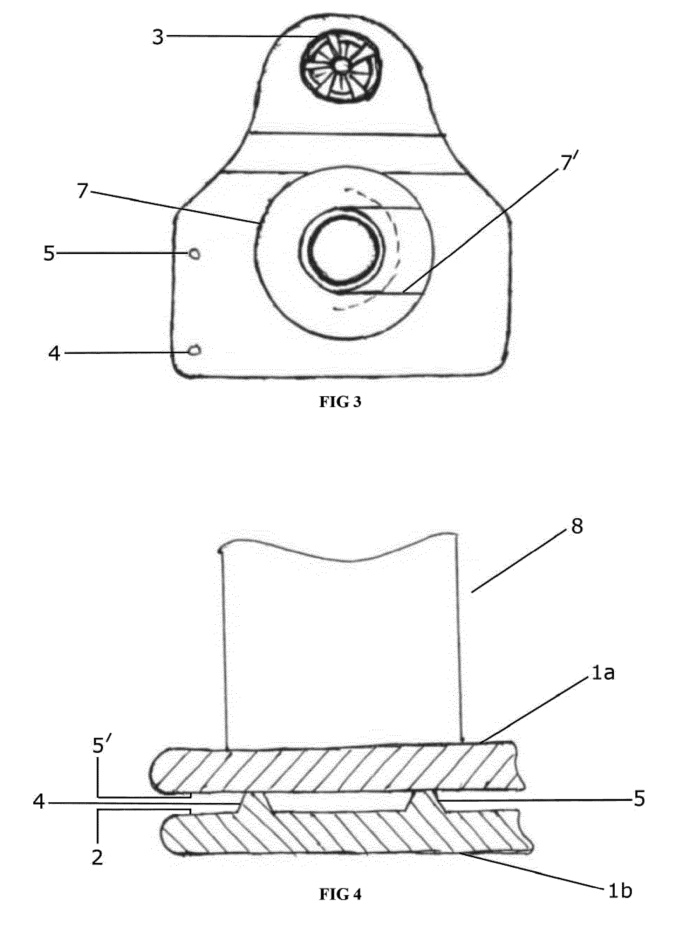

The plate part of the male part is formed with two raised portions 4 and 5 (best shown in figures 1 and 4). There may be one raised portion 4/5 as well, as shown in figure 2, which shows the detail of a section through the livestock tag at a raised portion 4/5. The plate part having raised portions 4, 5 lie on the inner surface of each male part. Such raised portion is welded with the outer surface of another male part of a different livestock. This is further explained later, with reference to figure 4. The strength of the weld will depend on the dimensions of the raised portions. Thus, the strength of the weld may be controlled by varying the dimensions.

There may be one or more raised portions. The raised portions 4, 5 are formed in the area where the welding takes place, as shown in Figure 1, near the edge 6 of the male part 1. The welding takes place with the flat outer surface of a male part of another livestock tag. This takes place one after another in an overlapping fashion, so as to as a form a convenient strip. Of course, each male part of a livestock tag, in such strip, has its corresponding female part on its inner surface, welded in the manner as explained hereinbefore.

As stated in the preceding paragraph, figure 2 shows a detail of a section through the tag part 1 at a raised portion 4. The raised portions 4, 5 act as accumulators during the welding process, ensuring that the welding takes place across a small area of the tag parts.

In Figure 3, one disc shaped female part 7 is shown as welded with the inner surface of the corresponding male part. The RF module 7' with built in antenna is embedded within the female part. The female part 7 is of course, not restricted to any specific shape. It may have other shapes as well. However, it should be designed such that, its inner surface is weldable with the inner surface of the corresponding male part in a livestock tag, so as to form a single piece. Similarly, this is true in respect of the male part as well.

The welding process will now be explained in greater detail with reference to Figure 4. The male parts 1 a and 1 b are identical in figure 4. They have been represented by different reference numerals in figure 4, just to emphasize that they belong to two different livestock tags.

In Figure 4, one male part 1 a is overlapping with another male part 1 b. More particularly, the male part 1 b has raised portions 4, 5 on its plate part. These are on the inner surface of the male part 1 b. These raised portions 4,_5 may be away from the edges of the male part 1 b or may be near the edges.

The flat outer surface 5' of the male part 1 a is placed over the raised portions 4, 5 of the male part 1 b and welded along such raised portions. This is true for each male part in a strip. The row of overlapping tag parts is moved past a welding head 8.

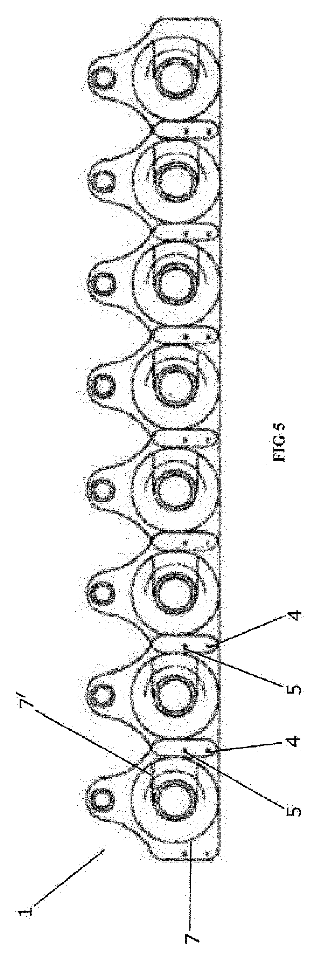

Preferably, the welding head is an ultrasonic welding head. However, other welding heads such as laser and thermal are also applicable. The sound waves from the ultrasonic welding head 8 penetrate the material of the tag parts 1a and 1 b, heating up the parts. Due to the relatively small dimensions of the raised portions 4, 5 these act as accumulators and start to fuse with the material of the overlying tag part 1 a.
When the row of tags move on, the material cool, so that the raised portions adhere to the overlying tag part 1 a. When the entire strip has passed by the welding head 8, a strip such as that shown in figure 5 results. Here, eight tag parts have been joined together but obviously, the strip may be longer or shorter.
In Figure 5, the female parts 7 with the RF modules 7' embedded in each female part are also shown. From figure 5, it is also very clear, how the inner surface of each female part 7, rests on the inner surface of its corresponding male part in a strip, so that in the event of any accidental breakage of the strip, the two remain unseparated.
Figure 5 also shows that each male part of a livestock tag is welded to another male part of a different livestock tag in an overlapping fashion, to from a strip. The pattern is somewhat similar to an echelon pattern.
The strip according to the present invention is convenient to transport, because it occupies less space. Further, due to the identical numbering of a male part and its corresponding female part along the visible respective outer surfaces, easy checking by the user is ensured. Size of welding area and strength of welding can be controlled as well, depending upon the users' requirement. These apart, the welding process is very simple, as preferably it does not require any additional material.
Above all, the strip ensures that the male part and its corresponding female part of a particular pair in a strip of livestock tags do not get separated before being put to actual use.
It should also be understood to persons skilled in the art that the tag parts may be welded together without utilizing raised portions. The attachment should be such that the tag parts can be easily pulled apart by hand but the male part and its corresponding female part does not separate accidentally.

Now, in absence of raised portions 4, 5 as explained in the preceding paragraph, the male parts are placed side by side and welded together along edges (not shown) in a strip. Then also, all objects of the present invention including the primary object are achieved.

The present invention can be applied to join tags of all types.

The present invention has been described with reference to a preferred embodiment and some drawings for the sake of understanding only and it should be clear to persons skilled in the art that the present invention includes all legitimate modifications within the ambit of what has been described hereinbefore and claimed in the appended claims.

## Claims

1. A method of manufacturing a strip of livestock tags, each tag having a male part (1) and a corresponding female part (7), said method is **characterized by**,
(i) forming a plurality of said livestock tags such that in each said tag, inner surface, that is to face the animal ear, of each female part (7) is detachably welded on the inner surface (2), that is to face the animal ear, of a corresponding male part (1) so as to form a single piece,
(ii) welding overapping surfaces of the male parts (1a, 1b) of different live stocklivestock tags in an overlapping fashion, one after another so as to form a strip.

2. The method according to claim 1, **characterized in that** step (ii) comprises welding by ultrasonic or laser or thermal means without any added material.

3. The method according to claim 2, **characterized in that** said welding is done between one or more raised portions (4,5) on the inner surface (2) of one male part (1b) of a tag and a flat portion (5') on the outer surface of the male part (1 a) of another tag, in an overlapping fashion.

4. A strip of livestock tags, comprising a plurality of tags joined together **characterized in that** said strip comprises a plurality of male parts attached to each other, each male part (1a, 1b) having a corresponding female part (7) detachably attached thereon, along respective inner surfaces (2), that are to face the animal ear, and each said male part (1a, 1b) of different tags being welded top each other, one after another.

5. The strip according to claim 4, **characterized in that** a flat portion (5') on the outer surface of one male part (1a) of a tag, is detachable welded with one or more protrusions (4,5) on the inner surface (2) of another male part (1b) of another tag, one after anotner **in that** manner, so as to form an overlapping pattern.

6. The strip according to claim 4, **characterized in that** each said male part (1b) of one tag is detachably welded to the male part (1a) of another tag, one after another along respective edges.

## Patentansprüche

1. Verfahren zum Herstellen eines Bands aus Viehetiketten, wobei jedes Etikett einen männlichen Teil (1) und einen korrespondierenden weiblichen Teil (7) aufweist, wobei das Verfahren **gekennzeichnet ist durch**
(i) Bilden einer Vielzahl von Viehetiketten, so dass in jedem Etikett eine innere Oberfläche, die dem Tierohr gegenüberliegt, jedes weiblichen Teils (7) ablösbar auf die innere Oberfläche (2), die dem Tierohr gegenüberliegt, eines korrespondierenden männlichen Teils (1) geschweißt ist, um ein einziges Teil zu bilden,
(ii) Schweißen von überlappenden Oberflächen der männlichen Teile (1 a, 1 b) verschiedener Viehetiketten in überlappender Weise eins nach dem anderen, um ein Band zu bilden.

2. Verfahren nach Anspruch 1, **dadurch gekennzeichnet, dass** der Schritt (ii) ein Schweißen durch Ultraschall, Laser oder thermische Mittel ohne Zugabe eines Materials umfasst.

3. Verfahren nach Anspruch 2, **dadurch gekennzeichnet, dass** Schweißen zwischen einem oder mehreren erhabenen Abschnitten (4, 5) der inneren Oberfläche (2) eines männlichen Teils (1 b) eines Etiketts und eines flachen Abschnitts (5') auf der äußeren Oberfläche des männlichen Teils (1a) eines anderen Etiketts in überlappender Weise gemacht wird.

4. Band aus Viehetiketten, umfassend eine Vielzahl miteinander verbundener Etiketten, **dadurch gekennzeichnet, dass** das Band eine Vielzahl von männlichen Teilen, welche aneinander angeheftet sind, umfasst, wobei jedes männliche Teil (1 a, 1 b) ein korrespondierendes weibliches Teil (7) aufweist, welches lösbar entlang der jeweiligen inneren Oberfläche (2), die dem Tierohr gegenüberliegt, verbunden ist, und wobei jedes männliche Teil (1 a, 1 b) verschiedener Etiketten miteinander eins nach dem anderen verschweißt ist.

5. Band nach Anspruch 4, **dadurch gekennzeichnet, dass** ein flacher Abschnitt (5') auf der äußeren Oberfläche des männlichen Teils (1 a) eines Etiketts lösbar mit einem oder mehreren Vorsprüngen (4, 5) auf der inneren Oberfläche (2) eines anderen männlichen Teils (1 b) eines anderen Etiketts eines nach dem anderen in der Weise verschweißt ist, um ein überlappendes Muster zu bilden.

6. Band nach Anspruch 4, **dadurch gekennzeichnet, dass** jedes männliche Teil (1 b) eines Etiketts lösbar an das männliche Teil (1 a) eines anderen Etiketts eins nach dem anderen entlang der jeweiligen Kanten geschweißt ist.

## Revendications

1. Procédé de fabrication d'un ruban d'étiquettes pour bétail, chaque étiquette ayant une partie mâle (1) et une partie femelle (7) correspondante, ledit procédé étant **caractérisé par**
(i) la formation d'une pluralité desdites étiquettes pour bétail de telle sorte que, dans chacune desdites étiquettes, la surface intérieure, qui doit faire face à l'oreille de l'animal, de chaque partie femelle (7), est soudée de manière détachable sur la surface intérieure (2), qui doit faire face à l'oreille de l'animal, d'une partie mâle (1) correspondante de manière à former une seule pièce,
(ii) le soudage des surfaces chevauchantes des parties mâles (1a, 1b) de différentes étiquettes pour bétail de manière chevauchante, les unes après les autres de manière à former un ruban.

2. Procédé selon la revendication 1, **caractérisé en ce que** l'étape (ii) comprend le soudage par un moyen à ultrasons ou à laser ou thermique sans aucun autre matériau ajouté.

3. Procédé selon la revendication 2, **caractérisé en ce que** ledit soudage est effectué entre une ou plusieurs portions surélevées (4,5) sur la surface intérieure (2) d'une partie mâle (1b) d'une étiquette et une portion plate (5') sur la surface extérieure de la partie mâle (1a) d'une autre étiquette, de manière chevauchante.

4. Ruban d'étiquettes pour bétail, comprenant une pluralité d'étiquettes reliées ensemble, **caractérisé en ce que** ledit ruban comprend une pluralité de parties mâles attachées les unes aux autres, chaque partie mâle (1a, 1b) ayant une partie femelle (7) correspondante attachée de manière détachable sur celle-ci, le long de surfaces intérieures (2) respectives, qui doivent faire face à l'oreille de l'animal, et lesdites parties mâles (1a, 1b) de différentes étiquettes étant soudées les unes aux autres, l'une après l'autre.

5. Ruban selon la revendication 4, **caractérisé en ce qu'**une portion plate (5') sur la surface extérieure d'une partie mâle (1a) d'une étiquette est soudée de manière détachable à une ou plusieurs saillies (4,5) sur la surface intérieure (2) d'une autre partie mâle (1b) d'une autre étiquette, l'une après l'autre, de manière à former un motif de chevauchement.

6. Ruban selon la revendication 4, **caractérisé en ce que** chaque dite partie mâle (1b) d'une étiquette est soudée de manière détachable à la partie mâle (1a) d'une autre étiquette, l'une après l'autre le long de bords respectifs.
